# EUROPÄISCHE PATENTSCHRIFT

(11) **EP 1 052 734 B1**
(45) Veröffentlichungstag und Bekanntmachung des Hinweises auf die Patenterteilung: **24.04.2002**
(21) Anmeldenummer: 00109185.9
(22) Anmeldetag: 09.05.2000
(51) Int. Cl.: H01R 13/516, H01R 13/73, H01R 9/26, H02B 1/052

(54) **Haltesystem für verschiedene Typen Steckverbinder**
Holding system for different types of connectors
Système de maintien pour des différents types de connecteurs

(30) Priorität: 12.05.1999 DE 29908490 U
(43) Veröffentlichungstag der Anmeldung: 15.11.2000
(73) Patentinhaber: Contact GmbH, Elektrische Bauelemente, D-70565 Stuttgart (DE)
(72) Erfinder: Cech, Markus, 73760 Ostfildern (DE); Andrä, Frank, 73779 Deizisau (DE)
(74) Vertreter: Schmidt, Steffen J., Dipl.-Ing.

(56) Entgegenhaltungen:
- EP-A- 0 750 371
- GB-A- 2 187 901
- GB-A- 2 260 658
- PATENT ABSTRACTS OF JAPAN vol. 98, no. 11, 30. September 1998 (1998-09-30) & JP 10 162904 A (MATSUSHITA), 19. Juni 1998 (1998-06-19)

## Beschreibung

Die Erfindung betrifft ein Haltesystem für verschiedene Typen Steckverbinder, mit verschiedenen Typen erster Isolierkörper, die an Grundplatten befestigt sind.

Ein derartiges Haltesystem dient zur Montage von Steckverbindern z.B. in einem Schaltschrank. Dabei wird die Grundplatte mit dem ersten Isolierkörper auf einer sog. Hutschiene befestigt, so daß anschließend ein zweiter Isolierkörper in den ersten Isolierkörper einsteckbar ist, um eine elektrische Verbindung herzustellen. Da die Isolierkörper meist viele Kontaktstifte umfassen, können große Steck- und Ziehkräfte entstehen. Das Haltesystem muß daher robust und sehr stabil ausgeführt sein. Dennoch soll das Haltesystem leicht zu montieren und für Servicezwecke einfach zu demontieren sein.

Beim Aufbau eines Schaltschrankes sind viele verschiedene Typen Steckverbinder auf der Hutschiene zu befestigen. Dabei kommen bisher verschiedene Haltesysteme zum Einsatz. Allgemein wird angestrebt, die Herstellungs-, Montage- und Servicekosten zu verringern. Hierzu gilt es die Materialkosten für die Haltesysteme zu verringern. Ferner sollen die Zeiten für Konfektionierung und Nachverdrahtung verringert werden.

Der Erfindung liegt die Aufgabe zugrunde, ein Haltesystem für verschiedene Typen Steckverbinder vorzusehen, das hohe Steckund Ziehkräfte aufnehmen kann, gleichzeitig leicht zu montieren und demontieren ist und dabei geringe Materialkosten aufweist.

Die Aufgabe ist erfindungsgemäß durch ein Haltesystem für verschiedene Typen Steckverbinder gelöst, das verschiedene Typen erster Isolierkörper aufweist, die an Grundplatten befestigt sind, und dadurch gekennzeichnet ist, daß ein einziger Typ Grundplatte vorgesehen ist und diese Grundplatte einen ortsfesten Halter sowie einen versetzbaren Halter aufweist, der derart versetzbar ist, daß jeder der verschiedenen Typen erster Isolierkörper an der Grundplatte befestigbar ist.

Durch den versetzbaren Halter ist die Grundplatte des Haltesystems an die verschiedenen Typen erster Isolierkörper anpaßbar, so daß diese an ein und denselben Typ Grundplatte befestigbar sind. Die Anzahl gleicher Grundplatten ist dadurch höher und die Kosten für diese Gleichteile sind daher verringert. Eine Vorratshaltung für verschiedene Typen Grundplatten entfällt. Ferner ist der versetzbare Halter leicht handhabbar, so daß die Grundplatte einfach an verschiedene Typen Isolierkörper anpaßbar ist. Darüber hinaus ist die Grundplatte bei Umbauten wiederverwendbar und schnell auf einen anderen Typ Isolierkörper umstellbar.

Bei einer vorteilhaften Weiterbildung ist der versetzbare Halter als ein geführter Schlitten ausgebildet. Das Haltesystem ist dadurch besonders robust.

Der versetzbare Halter ist vorteilhaft mit der Grundplatte lösbar verrastet. Eine solche Verrastung kann schnell umgestellt werden und gibt für die verschiedenen Typen Isolierkörper verschiedene Befestigungsstellungen vor.

Ferner weist der Halter bevorzugt Dorne auf, auf denen der erste Isolierkörper lösbar befestigt ist. Durch diese Dorne wird der Isolierkörper in einem Abstand von der Grundplatte gehalten, so daß er gut zugänglich ist und ausreichend Platz für die von ihm wegführenden Kabel vorhanden ist.

Ein rechteckiger erster Isolierkörper ist besonders vorteilhaft befestigt, indem an seinen beiden Stirnseiten je ein Seitenteil aufgeschoben ist, mit denen er an den Haltern lösbar verrastet ist. Die nur auf die Stirnseiten begrenzten Seitenteile erfordern wenig Material und können als Gleichteile ausgebildet sein. Durch die Verrastung mit den Haltern ist der erste Isolierkörper an der Grundplatte leicht montier- und demontierbar. Konfektionierungs- und Servicearbeiten werden dadurch erleichtert. Darüber hinaus sind die Längsseiten des Isolierkörpers jederzeit frei zugänglich.

In besonders vorteilhafter Weise sind die Seitenteile mit Quetschlamellen versehen, mittels denen sie an Schutzleiterblechen des ersten Isolierkörpers gehalten sind. Die Quetschlamellen verhindern, daß die Seitenteile nach einer Demontage des Isolierkörpers von diesem abfallen.

Bevorzugt ist ein zweiter Isolierkörper vorgesehen, der mit dem ersten Isolierkörper zusammensteckbar ist. Dieser zweite Isolierkörper ist in einem Rahmen mit Aussparungen an den Längsseiten befestigt. Im Gegensatz zu Isolierkörpern, die in einem Gehäuse befestigt sind, ist der zweite Isolierkörper so besser zugänglich. Insbesondere die Aussparungen an den Längsseiten des Rahmens ermöglichen es ungehindert an Klemmschrauben des Isolierkörpers zu gelangen.

Vorteilhaft weist der zweite Isolierkörper Schutzleiterbleche auf, mit denen er im Rahmen lösbar verrastet ist. Der Isolierkörper ist mit seinen Schutzleiterblechen im Rahmen stabil gestützt und kann bei der Konfektionierung dennoch schnell in den Rahmen montiert werden.

Darüber hinaus ist der Rahmen bevorzugt mit den Seitenteilen lösbar verrastet. Das Haltesystem ist durch diese Verrastung insgesamt robust zusammengefügt und gleichzeitig leicht zu trennen. Die einfache Trennbarkeit ist besonders beim Recyclen der Kunststoffbauteile von Vorteil.

Es ist außerdem vorteilhaft, wenn zum Lösen der Verrastungen Griffe mit Beschriftungsfeldern vorgesehen sind. Dadurch sind zum einen die verschiedenen Verrastungen leicht lösbar und zum anderen die einzelnen Steckverbinder gut zu markieren, ohne dafür zusätzliche Schriftfelder zu benötigen, die Kosten verursachen und zusätzlichen Platz erfordern.

Ein bevorzugtes Ausführungsbeispiel der Erfindung wird im folgenden anhand schematischer Zeichnungen dargestellt. Es zeigt:

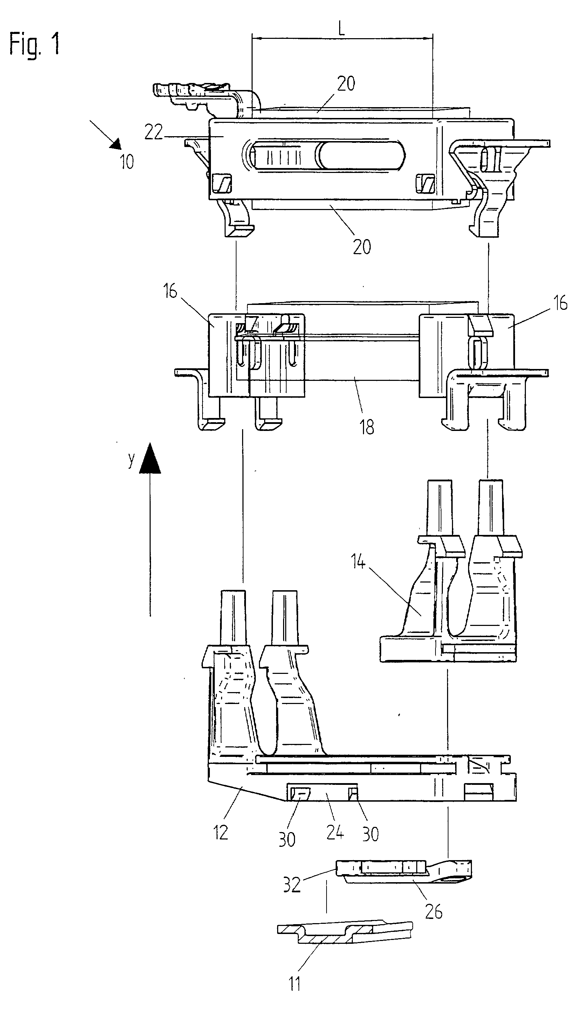

- Fig. 1: ein erfindungsgemäßes Haltesystem in einer Explosionsdarstellung,

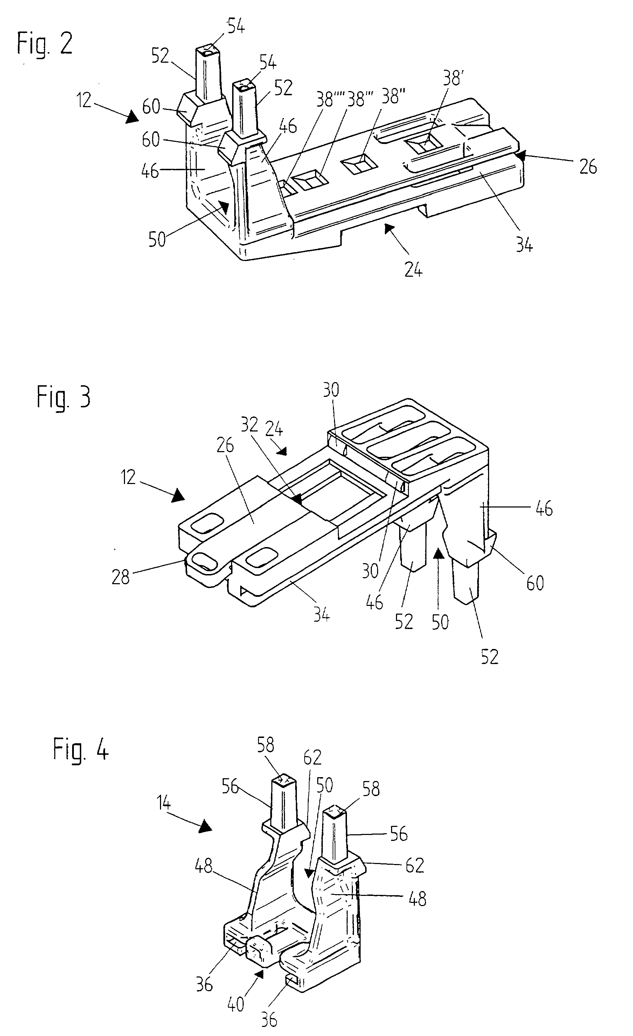

- Fig. 2: eine Grundplatte aus Fig. 1 in einer perspektivischen Ansicht von oben,
- Fig. 3: die Grundplatte aus Fig. 2 in einer perspektivischen Ansicht von unten,
- Fig. 4: einen Schlitten aus Fig. 1 in einer perspektivischen Ansicht von oben,

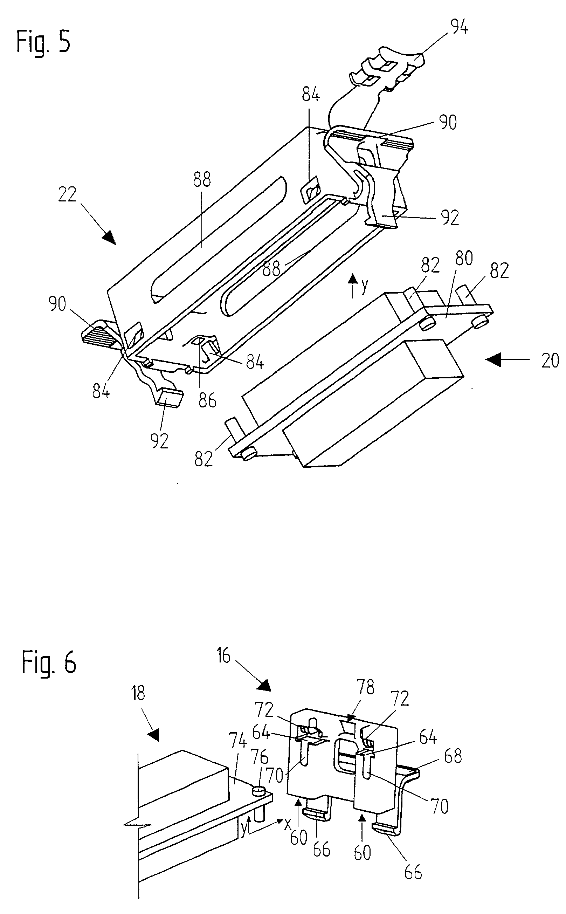

- Fig. 5: einen Rahmen aus Fig. 1 und einen zweiten Isolierkörper in einer perspektivischen Ansicht von unten, sowie
- Fig. 6: ein Seitenteil aus Fig. 1 und einen gebrochen dargestellten ersten Isolierkörper in einer perspektivischen Ansicht von oben.

Das Haltesystem 10 ist zum Anbringen an einer Hutschiene 11 vorgesehen, die in einem Schaltschrank (nicht dargestellt) befestigbar ist. Auf der Hutschiene 11 ist zunächst eine Grundplatte 12 angebracht, auf der ein Schlitten 14 verschiebbar ist. Die Baugruppe aus Hutschiene 11, Grundplatte 12 und Schlitten 14 kann vorkonfektioniert geliefert werden.

Auf dem Schlitten 14 und der Grundplatte 12 sind je ein Seitenteil 16 in senkrechter Richtung zur Basisfläche der Grundplatte 12 aufgesetzt. Zwischen den Seitenteilen 16 ist ein langgestreckter im wesentlichen quaderförmiger erster Isolierkörper 18 gehalten, in den ein zweiter Isolierkörper 20 an der der Grundplatte 12 gegenüberliegenden Seite einsteckbar ist. Der zweite Isolierkörper 20 ist seinerseits in einem Rahmen 22 gehalten. Die Isolierkörper 18 bzw. 20 umfassen Stifte und Buchsen (nicht dargestellt), mittels denen sie einen elektrischen Steckverbinder bilden.

Das Haltesystem 10 umfaßt verschiedene Typen erster und zugehöriger zweiter Isolierkörper, die sich durch ihre Anzahl Stifte bzw. Buchsen unterscheiden und hierzu verschiedene Längen L aufweisen. Die Seitenteile 16 können unabhängig von der Länge L des ersten Isolierkörpers 18 auf dessen Stirnseite aufgeschoben werden und anschließend an dem entsprechend verschobenen Schlitten 14 und der Grundplatte 12 befestigt werden. Um die verschiedenen Typen zweiter Isolierkörper 20 aufzunehmen, sind verschiedene Typen Rahmen 22 vorgesehen, die unterschiedliche Längen aufweisen, ansonsten aber baugleich sind. Durch den verschiebbaren Schlitten 14 ist das Haltesystem 10 an die verschiedenen Rahmen 22 anpaßbar und für verschiedene Typen Steckverbinder verwendbar.

An der dem Schlitten 14 gegenüberliegenden Seite der Grundplatte 12 ist etwa mittig in dessen Querrichtung eine Aussparung 24 ausgebildet, die auf die Hutschiene 11 paßt. Quer zur Aussparung 24 ist ein Schieber 26 mit einer angespritzten Kunststoff-Feder (nicht dargestellt) angeordnet, der am der Grundplatte 12 abgewandten Ende eine Öffnung 28 aufweist. In die Öffnung 28 ist ein Schraubendreher einsetzbar, mit dem der Schieber 26 zurückziehbar ist. An einer dem Schieber 26 gegenüberliegenden Seitenwand der Aussparung 24 und am der Aussparung 24 zugewandten Ende des Schiebers 26 sind Haken 30 bzw. 32 ausgebildet, die hinter die Hutschiene 11 greifen und dadurch die Grundplatte 12 an dieser befestigen.

An den beiden Längsseiten der Grundplatte 12 ist jeweils eine Nut 34 ausgebildet, in denen der Schlitten 14 mit je einem an seiner Unterseite ausgebildeten Steg 36 geführt und verschiebbar ist. Auf der Oberseite der Grundplatte 12 sind quaderförmige Aussparungen 38', 38'', 38"' und 38"" ausgeformt. An der Unterseite des Schlittens 14 ist ein Rastnocken 40 mittels einer Blattfeder 42 gefedert gelagert und durch eine Öffnung 44 am freien Ende der Blattfeder 42 mit einem Schraubendreher anhebbar. Bei angehobenen Rastnocken 40 ist der Schlitten 14 in den Nuten 34 der Grundplatte 12 verschiebbar. Der Rastnocken 40 arretiert in einer der Aussparungen 38' bis 38'''' und legt damit für den Schlitten 14 definierte Stellungen fest, die den verschiedenen Längen L der verschiedenen Typen Steckverbinder bzw. den zugehörigen Typen Rahmen 22 entsprechen.

An der den Seitenteilen 16 zugewandten rechteckigen Seite der Grundplatte 12 stehen in den Ecken an einer Stirnseite zwei Halter die als Dorne 46 ausgebildet sind, ab. In gleicher Weise stehen vom Schlitten 14 zwei Halter die als Dorne 48 ausgebildet sind, ab. Je zwei Dorne 46 bzw. 48 bilden eine U-förmige Stütze mit einem dazwischenliegenden Freiraum 50. Auf die Dorne 46 bzw. 48 kann je ein Seitenteil 16 mit dem dazwischen gehaltenen ersten Isolierkörper 18 aufgesetzt werden. Der Freiraum 50 dient zum Abführen eines Kabelstrangs (nicht dargestellt), die an der der Grundplatte 12 zugewandten Seite des ersten Isolierkörpers 18 angebracht sind.

Die Dorne 46 weisen an ihren freien Endbereichen im Querschnitt quadratische, leicht konische Säulen auf, in denen kreiszylindrische Sacklöcher ausgebildet sind. Genauso weisen die Dorne 48 entsprechende Säulen 56 und Sacklöcher 58 auf. Ferner sind an den Dornen 46 und 48 Rastnocken 60 bzw. 62 ausgebildet, die in Richtung der Stirnseiten der Grundplatte 12 abstehen.

In den beiden Ecken der Seitenteile 16 sind in Richtung Y zwei im Querschnitt quadratische Löcher 64 ausgebildet. Ferner sind an jedem der Seitenteile 16 in den Ecken zwei zur Stirnseite der Grundplatte 12 gewandte Rasthaken 66 an einem gefederten Griff 68 angeordnet. Der Griff 68 weist gegenüber der Grifffläche ein Beschriftungsfeld auf.

Auf der dem ersten Isolierkörper 18 zugewandten Seite sind am Seitenteil 16 zu den Löchern 64 parallele Schlitze 70 und oberhalb diesen Quetschlamellen 72 ausgebildet. Unterhalb der Quetschlamellen 72 ist damit ein am Umfang des ersten Isolierkörpers 18 in Richtung X ausgebildetes Schutzleiterblech 64 in das Seitenteil 16 einschiebbar. Dabei treten Schrauben 76, die in Richtung Y im Schutzleiterblech 74 eingesetzt sind, durch die Schlitze 70 und werden durch die Quetschlamellen 72 im Seitenteil 16 gehalten. Das Seitenteil 16 kann daher nicht vom ersten Isolierkörper 18 abfallen.

Der erste Isolierkörper 18 ist mit zwei an seinen Stirnseiten montierten Seitenteilen 16 auf den Dornen 46 und 48 befestigbar. Dabei sind die Löcher 64 auf die Säulen 52 und 56 aufgeschoben, wobei die Schrauben 76 in den Sacklöchern 54 und 58 positioniert werden. Die Rasthaken 66 hintergreifen die Rastnocken 60 bzw. 62 und halten dadurch die Seitenteile 16 an der Grundplatte 12 und am Schlitten 14.

Auf den derart befestigten ersten Isolierkörper 18 ist,der zweite Isolierkörper 20 im Rahmen 22 steckbar. Hierzu weist jedes Seitenteil 16 an seiner den Stirnseiten des ersten Isolierkörpers 18 abgewandten Seite je einen Rastnocken 78 auf. Der zweite Isolierkörper 20 hat analog zum ersten Isolierkörper 18 ein Schutzleiterblech 80, in dessen Ecken Schrauben 82 eingesetzt sind. Das Schutzleiterblech 80 ist in den Rahmen 22 einsetzbar und dabei durch Rastfedern 84 gehalten, die in jeder Ecke des Rahmens 22 ausgebildet sind. Das Schutzleiterblech 80 kommt hinter den Rastfedern 84 an je einem Anschlag mit Sacklöchern 86 zum Anliegen. Dabei treten die Schrauben 82 in die Sacklöcher 86 ein und sind in diesen positioniert.

An den Längsseiten des Rahmens 22 ist je eine Aussparung 88 ausgebildet, die einen Zugang zu Klemmschrauben (nicht dargestellt) im zweiten Isolierkörper 20 zum Anschluß eines Kabelstrangs (nicht dargestellt) ermöglichen.

An den Stirnseiten des Rahmens 22 sind ferner je ein abstehender Griff 90 mit einem Beschriftungsfeld ausgebildet, an dem ein durch diesen versetzbarer Rasthaken 92 einstückig ausgebildet sind. Die zwei Rasthaken 92 verrasten im aufgesteckten Zustand des Rahmens 22 (und des zweiten Isolierkörpers 20) auf den Seitenteilen 16 (bzw. dem ersten Isolierkörper 18) mit deren Rastnocken 78 und halten damit die beiden Isolierkörper miteinander verbunden.

Über eine an einer Stirnseite des Rahmens 22 ausgebildete Zugentlastung 94 wird der Kabelstrang des zweiten Isolierkörpers 20 abgeführt, der an der der Grundplatte 12 abgewandten Seite des zweiten Isolierkörpers 20 befestigt ist.

Bei Isolierkörpern mit einer großen Anzahl Stiften bzw. Buchsen besteht die Möglichkeit, daß die Isolierkörper 18 und 20 zusätzlich durch die Schrauben 76 und 82 in den Sacklöchern 54 bzw. 58 und 86 verschraubt werden.

## Patentansprüche

1. Haltesystem (10) für verschiedene Typen Steckverbinder, mit verschiedenen Typen erster Isolierkörper (18), die jeweils an einer Grundplatte (12) befestigt sind,
**dadurch gekennzeichnet, daß** ein einziger Typ Grundplatte (12) vorgesehen ist und diese Grundplatte (12) einen ortsfesten Halter (46) sowie einen gegenüberliegenden, versetzbaren Halter (14, 48) aufweist, der derart versetzbar ist, daß jeder der verschiedenen Typen erster Isolierkörper (18) an der Grundplatte (12) zwischen den zwei Haltern in senkrechter Richtung zur Basisfläche der Grundplatte (12) befestigbar ist.

2. Haltesystem nach Anspruch 1,
**dadurch gekennzeichnet, daß** der versetzbare Halter ein geführter Schlitten (14) ist.

3. Haltesystem nach Anspruch 1 oder 2,
**dadurch gekennzeichnet, daß** der versetzbare Halter (14, 48) mit der Grundplatte (12) lösbar verrastet ist.

4. Haltesystem nach einem der vorhergehenden Ansprüche,
**dadurch gekennzeichnet, daß** die Halter als Dorne (46, 48) ausgebildet sind, auf denen der erste Isolierkörper (18) lösbar befestigt ist.

5. Haltesystem nach einem der vorhergehenden Ansprüche,
**dadurch gekennzeichnet, daß** der erste Isolierkörper (18) rechteckig ist und an seinen Stirnseiten Seitenteile (16) aufgeschoben sind, mit denen er an den Haltern (46, 48) lösbar verrastet ist.

6. Haltesystem nach Anspruch 5,
**dadurch gekennzeichnet, daß** die Seitenteile (16) Quetschlamellen (72) aufweisen, mittels denen sie an einem Schutzleiterblech (74) des ersten Isolierkörpers (18) gehalten sind.

7. Haltesystem nach einem der vorhergehenden Ansprüche,
**dadurch gekennzeichnet, daß** mit dem ersten Isolierkörper (18) ein zweiter Isolierkörper (20) zusammensteckbar ist, der in einem Rahmen (22) mit Aussparungen (88) an den Längsseiten befestigt ist.

8. Haltesystem nach Anspruch 7,
**dadurch gekennzeichnet, daß** der zweite Isolierkörper (20) ein Schutzleiterblech (80) aufweist, mit dem er im Rahmen (22) lösbar verrastet ist.

9. Haltesystem nach den Ansprüchen 5 oder 6 und 7 oder 8,
**dadurch gekennzeichnet, daß** der Rahmen (22) mit den Seitenteilen (16) lösbar verrastet ist.

10. Haltesystem nach einem der Ansprüche 5 oder 9,
**dadurch gekennzeichnet, daß** zum Lösen der Verrastungen Griffe (68, 90) mit Beschriftungsfeldern vorgesehen sind.

## Claims

1. A securing system (10) for different types of a plug connector, having different types of first insulating elements, which are secured in each case to a base plate (12),
**characterised in that** a single type of base plate (12) is provided and said base plate (12) comprises a stationary holding element (46) and an oppositely located, displaceable holding element (14, 48) which is displaceable in such a manner that each of the different types of a first insulating element (18) can be secured to the base plate between the two holding elements in vertical direction to the base surface of the base plate (12).

2. The securing system as claimed in claim 1,
**characterised in that** the displaceable holding element is a guided carriage (14).

3. The securing system as claimed in claim 1 or 2,
**characterised in that** the displaceable holding element (14, 48) is releasably locked to the base plate (12).

4. The securing system as claimed in one of the preceding claims,
**characterised in that** the holding elements are designed as pegs (46, 48) on which the first insulating element (18) is releasably secured.

5. The securing system as claimed in one of the preceding claims,
**characterised in that** the first insulating element (18) is rectangular and onto its end faces are pushed side elements (16), by means of which it is releasably locked to the holding elements (46, 48).

6. The securing system as claimed in claim 5,
**characterised in that** the side elements (16) comprise pinch-type brackets (72), by means of which the side elements (16) are secured to a protective conductor plate (74) of the first insulating element (18).

7. The securing system as claimed in one of the preceding claims,
**characterised in that** a second insulating element (20), which is secured in a frame (22) with recesses (88) on the longitudinal sides, can be plug-connected to the first insulating element (18).

8. The securing system as claimed in claim 7,
**characterised in that** the second insulating element (20) comprises a protective conductor plate (80), by means of which it is releasably locked in the frame (22).

9. The securing system as claimed in claim 5 or 6 and 7 or 8,
**characterised in that** the frame (22) is releasably locked to the side elements (16).

10. The securing system as claimed in one of claims 5 or 9,
**characterised in that** grips (68, 90) with labelling panels are provided for releasing the locking connections.

## Revendications

1. Dispositif de maintien pour différents types de connecteurs enfichables, comprenant différents types de premiers corps d'isolation (18) qui sont fixés respectivement à une plaque de base (12),
**caractérisé en ce qu'**un seul type de plaque de base (12) est prévu et **en ce que** cette plaque de base (12) présente un élément de maintien fixe (46) ainsi qu'un élément de maintien (14, 48) pouvant être déplacé, situé à l'opposé qui peut être déplacé de telle manière que chacun des différents types de premiers corps d'isolation (18) puisse être fixé à la plaque de base (12) entre les deux éléments de maintien dans une direction perpendiculaire à la surface de base de la plaque de base (12).

2. Dispositif de maintien selon la revendication 1,
**caractérisé en ce que** l'élément de maintien pouvant être déplacé est un coulisseau (14) guidé.

3. Dispositif de maintien selon la revendication 1 ou 2,
**caractérisé en ce que** l'élément de maintien pouvant être déplacé (14, 48) est enclenché de façon détachable avec la plaque de base (12).

4. Dispositif de maintien selon l'une quelconque des revendications précédentes,
**caractérisé en ce que** les éléments de maintien sont sous forme de broches (46, 48) sur lesquelles est fixé de façon détachable le premier corps d'isolation (18).

5. Dispositif de maintien selon l'une quelconque des revendications précédentes,
**caractérisé en ce que** le premier corps d'isolation (18) est rectangulaire et **en ce que** des parties latérales (16) sont enfilées sur ses faces frontales, avec lesquelles il peut être enclenché de façon détachable sur les éléments de maintien (46, 48).

6. Dispositif de maintien selon la revendication 5,
**caractérisé en ce que** les parties latérales (16) présentent des lamelles élastiques à la compression (72) au moyen desquelles elles sont maintenues à une tôle conductrice de protection (74) du premier corps d'isolation (18).

7. Dispositif de maintien selon l'une quelconque des revendications précédentes,
**caractérisé en ce qu'**un deuxième corps d'isolation (20) peut être enfiché avec le premier corps d'isolation (18), qui est fixé dans un cadre (22) comprenant des évidements (88) dans les faces longitudinales.

8. Dispositif de maintien selon la revendication 7,
**caractérisé en ce que** le deuxième corps d'isolation (20) présente une tôle de protection conductrice (80) avec laquelle il peut être enclenché de façon détachable dans le cadre (22).

9. Dispositif de maintien selon les revendications 5 ou 6 et 7 ou 8,
**caractérisé en ce que** le cadre (22) est enclenché de façon détachable avec les parties latérales (16).

10. Dispositif de maintien selon la revendication 5 ou 9,
**caractérisé en ce que** des prises (68, 90) présentant des cases d'inscription sont prévues pour libérer les enclenchements.
